Europäisches Patentamt

European Patent Office

Office européen des brevets

(11) Veröffentlichungsnummer: **0 318 100**
**A2**

# (12) EUROPÄISCHE PATENTANMELDUNG

(21) Anmeldenummer: 88202630.5

(22) Anmeldetag: 23.11.88

(51) Int. Cl.⁴: **C03B 37/016 , C03B 8/02 , C03B 19/02**

(30) Priorität: 25.11.87 DE 3739907

(43) Veröffentlichungstag der Anmeldung:
**31.05.89 Patentblatt 89/22**

(84) Benannte Vertragsstaaten:
**DE FR GB NL SE**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB NL SE**

(72) Erfinder: **Clasen, Rolf, Dr. Dipl.-Phys.**
**Schlossparkstrasse 36**
**D-5100 Aachen(DE)**

(74) Vertreter: **Nehmzow-David, Fritzi-Maria et al**
**Philips Patentverwaltung GmbH**
**Wendenstrasse 35 Postfach 10 51 49**
**D-2000 Hamburg 1(DE)**

(54) **Verfahren zur Herstellung von Glaskörpern.**

(57) Verfahren zur Herstellung von Glaskörpern, bei dem das Ausgangsmaterial für den Glaskörper in Form einer thixotropen Suspension, bestehend aus $SiO_2$-Partikeln eines Durchmessers im Bereich von 10 bis 500 nm als Feststoff und Dispergierflüssigkeit zu einem Grünkörper verformt wird, wonach der entstandene Grünkörper gereinigt und gesintert wird, wobei die Suspension mit einem Feststoff: Dispergierflüssigkeit-Gewichtsverhältnis von 1:1 bis 1:1,5 über Siebe einer Maschenweite im Bereich von 3 bis 300 $\mu$m unter Einwirkung von Schall oder Ultraschall abgesiebt, die abgesiebte Suspension vorzugsweise durch Abpumpen eines Teils der Dispergierflüssigkeit unter Vakuum und Schall- oder unter Ultraschalleinwirkung auf ein Feststoff:Dispergierflüssigkeit-Gewichtsverhältnis von ≈ 1,3:1 eingeengt und in eine Form eingebracht wird, die Form mit der Suspension auf eine Temperatur unterhalb des Siedepunktes der Dispergierflüssigkeit erwärmt und der Grünkörper nach Abkühlen aus der Form entnommen und den weiteren Prozeßschritten zur Herstellung eines Glaskörpers unterzogen wird.

## Verfahren zur Herstellung von Glaskörpern

Die Erfindung betrifft ein Verfahren zur Herstellung von Glaskörpern, bei dem das Ausgangsmaterial für den Glaskörper in Form einer thixotropen Suspension, bestehend aus $SiO_2$-Partikeln eines Durchmessers im Bereich von 10 bis 500 nm als Feststoff und Dispergierflüssigkeit zu einem Grünkörper verformt wird, wonach der entstandene Grünkörper gereinigt und gesintert wird.

Aus DE-OS 35 37 972 ist ein derartiges Verfahren zur Herstellung von hochreinen Quarzglasrohren bekannt, bei dem durch Vernetzen (Koagulation) einer Suspension mit Feststoff aus kolloidalen Quarzglasteilchen ein formtreuer, offenporiger Grünkörper hergestellt wird. Dieser Grünkörper wird nach dem Trocknen und Reinigen zu einem transparenten Quarzglasrohr gesintert. Die Suspension sollte insbesondere für eine Rohrherstellung so hoch gefüllt sein wie möglich, da die Vernetzungszeit sich mit wachsendem Feststoffanteil stark verringert und somit der verfestigte Grünkörper schneller aus der formgebenden Apparatur entnommen werden kann. Für die Wirtschaftlichkeit eines derartigen Verfahrens ist es wünschenswert, daß möglichst kurze Zykluszeiten erreicht werden.

Die Herstellung hochgefüllter, insbesondere durch ionogene Zusätze stark thixotroper $SiO_2$-Suspensionen stößt in der Praxis auf Probleme, da während des Mischens des hochdispersen Feststoffanteils mit der Dispergierflüssigkeit eine dilatante Phase auftritt. Dies macht sich dadurch bemerkbar, daß die Viskosität der Suspension mit zunehmender Scherung ansteigt. Um eine noch gut gießfähige, jedoch hochgefüllte Suspension zu erreichen, muß ein aufwendiges Verfahren zur Herstellung der Suspension eingesetzt werden mit einem Wechsel von geringer Scherung während des Einrührens und hoher Scherung während des Homogenisierens. Wegen der raschen Verfestigung einer solchen hochgefüllten Suspension bereitet es auch Schwierigkeiten, agglomerierte Partikel oder grobe Verunreinigungen von der Suspension abzutrennen.

Der Erfindung liegt die Aufgabe zugrunde, das eingangs genannte Verfahren so zu verbessern, daß eine mit Feststoff hochgefüllte thixotrope, homogene und sehr gut gießfähige Suspension auf sehr einfache Weise erhalten wird.

Diese Aufgabe wird erfindungsgemäß dadurch gelöst, daß die Suspension mit einem Feststoff:Dispergierflüssigkeit-Gewichtsverhältnis von 1:1 bis 1:1,5 über Siebe einer Maschenweite im Bereich von 3 bis 300 μm abgesiebt, die abgesiebte Suspension auf ein Feststoff:Dispergierflüssigkeit-Gewichtsverhältnis von ≈ 1,3 : 1 eingeengt und in eine Form eingebracht wird, die Form mit der Suspension auf eine Temperatur unterhalb des Siedepunktes der Dispergierflüssigkeit erwärmt und der Grünkörper nach Abkühlen aus der Form entnommen und den weiteren Prozeßschritten zur Herstellung eines Glaskörpers unterzogen wird.

Nach einer vorteilhaften Weiterbildung des Verfahrens gemäß der Erfindung wird die abgesiebte Suspension durch Verdampfen eines Teils der Dispergierflüssigkeit unter Vakuum, vorzugsweise unter Schall- oder Ultraschalleinwirkung, eingeengt.

Als Dispergierflüssigkeit wird vorzugsweise Wasser eingesetzt.

Nach einer weiteren vorteilhaften Ausgestaltung des Verfahrens gemäß der Erfindung wird die Suspension mit dem Feststoff:Dispergierflüssigkeit-Gewichtsverhältnis von ≈ 1,3 : 1 zur Erhöhung des Dampfdruckes der Dispergierflüssigkeit erwärmt. Wird als Dispergierflüssigkeit Wasser eingesetzt, ist eine Erwärmung dieser Suspension auf eine Temperatur von ≈ 50 °C vorteilhaft.

Nach weiteren vorteilhaften Ausgestaltungen des Verfahrens nach der Erfindung wird der Suspension ein ionogener Zusatzstoff, der den pH-Wert der Suspension in Richtung auf den basischen Bereich (pH ≥ 5 und ≤ 8) verschiebt, zugesetzt. Vorzugsweise wird eine Fluorverbindung wie z.B. ein Fluorsalz als ionogener Zusatzstoff zugegeben, wie Ammoniumfluorid oder Ammoniumhexafluorsilikat oder Ammoniumhydrogenfluorid. Der ionogene Zusatzstoff kann in vorzugsweise einer Menge von 0,1 bis 5 Gew.%, bezogen auf den Feststoffanteil der Suspension, z.B. in Form einer wässerigen Lösung zugesetzt werden. Durch Zufügen eines ionogenen Zusatzstoffes läßt sich die Thixotropie der Suspension in vorteilhafter Weise beeinflussen und besser beherrschen.

Als Form wird eine der Form des herzustellenden Glaskörpers entsprechende Form aus einem vorzugsweise für Wassermoleküle permeablen, vorzugsweise hydrophoben Kunststoff eingesetzt.

Es lassen sich mit Vorteil elastische oder auch unter leichtem Überdruck formstabile Kunststoffe als Material für die Form verwenden. Als elastischer Kunststoff kann vorzugsweise Siliconkautschuk und als unter leichtem Überdruck formstabiler Kunststoff kann vorteilhafterweise Polyethylenterephthalat oder ein Polyamid eingesetzt werden.

Mit dem Verfahren gemäß der vorliegenden Erfindung lassen sich unterschiedlich geformte Glaskörper herstellen. Es ist zum Beispiel möglich, eine mehrteilige Form aus einem formstabilen Kunststoff einzusetzen. Besonders geeignet sind elastische Schläuche, die in der Form des herzustellenden Glaskörpers entsprechend geformte Stützformen eingesetzt werden und durch beispielsweise Aufblasen an die Stützform angepaßt werden, wobei die Stützform zum Beispiel zur Herstellung von rotationssymmetrischen Glaskörpern oder aber auch zur Herstellung von beliebig anders geformten, beispielsweise rechteckigen, Glaskörpern ausgelegt sein kann.

Insbesondere zur Herstellung von rohrförmigen Glaskörpern ist es vorteilhaft, wenn eine rotationssymmetrische Stützform eingesetzt wird, in die unter Freilassen eines Spaltes eine aus einem elastischen oder unter geringem Überdruck formstabilen Kunststoffschlauch gebildete, die Suspension enthaltende Form eingesetzt wird. Der Zwischenraum zwischen der Stützform und der aus dem Schlauch gebildeten Form wird mit einer mit dem Material der Form chemisch nicht reagierenden Flüssigkeit ausgefüllt, deren Dichte größer als die Dichte der in der Form enthaltenen Suspension ist. Eine geeignete Flüssigkeit ist zum Beispiel eine konzentrierte Ammoniumjodid-Lösung. Bei einer Rotation des aus Stützform und Form bestehenden Systems erfolgt eine Selbstzentrierung der Form in der Stützform und eine Abscheidung der in der Form enthaltenen Suspension auf der Innenwandung des Schlauches.

Es ist zum Beispiel auch möglich, andere rotationssymmetrische Glaskörper, wie beispielsweise Stäbe, herzustellen. Hierzu ist es nicht erforderlich, einen Schleudergußprozeß anzuwenden, sondern die Form in Gestalt eines Schlauches wird vollständig mit Suspension gefüllt und nach Verfestigung des Grünkörpers entfernt.

Mit dem Verfahren gemäß der Erfindung ergibt sich insbesondere der Vorteil, daß eine Durchmischung thixotroper, hochgefüllter, schnell vernetzender Suspensionen, wie sie für die Herstellung von hochreinen Glaskörpern benötigt werden, schnell und automatisierbar zu erreichen ist. Ein weiterer Vorteil ist, daß derartige Suspensionen frei von Gasblasen herstellbar sind.

Diese Vorteile werden dadurch erreicht, daß die Suspension zunächst dünnflüssiger angesetzt wird, dann durch feinmaschige Siebe gegeben wird und anschließend die gewünschte Konzentration durch Einengen, beispielsweise durch Verdampfen der Dispergierflüssigkeit unter Vakuum, eingestellt wird. Diese beiden Prozeßschritte werden vorzugsweise unter Einwirkung von Schall oder Ultraschall durchgeführt.

Anhand eines Ausführungsbeispiels wird die Erfindung beschrieben und in ihrer Wirkungsweise erläutert.

Eine Suspension, bestehend aus hochdispersem Quarzglaspulver mit einem Teilchendurchmesser im Bereich von 10 bis 500 nm, vorzugsweise 10 bis 100 nm, und einem mittleren Teilchendurchmesser von 40 nm läßt sich binnen weniger Minuten in einer Dispergierflüssigkeit, vorzugsweise Wasser, dispergieren, wenn das Feststoff:Dispergierflüssigkeit-Verhältnis im Bereich zwischen 1:1 und 1:1,5 liegt und wenn insbesondere ionogene Zusätze, die den pH-Wert der Suspension in Richtung auf den basischen Bereich (pH $\geq$ 5 und $\leq$ 8) verschieben, in einer Menge von 0,1 bis 5 Gew.%, bezogen auf den Feststoffanteil der Suspension, zugefügt werden. Als ionogene, die Vernetzung (Koagulation)fördernde Zusätze sind fluorhaltige Salze wie Ammoniumfluorid, Ammoniumhexafluorsilikat oder Ammoniumhydrogenfluorid in wässeriger Lösung gut geeignet.

Eine derartige Suspension kann durch ein feinmaschiges Sieb mit einer Maschenweite zwischen 3 und 300 μm laufen. Das Sieb sollte vorzugsweise aus Kunststoffäden gewebt sein, um jegliche Kontamination der Suspension, z.B. mit Metallen, zu vermeiden. Bei diesem Absiebprozeß werden nicht dispergierte Agglomerate des Ausgangsmaterials sowie grobteilige Verunreinigungen fast vollständig zurückgehalten. Um ein vorzeitiges Verstopfen der Siebe zu vermeiden, ist es zweckmäßig, die Siebung stufenweise durchzuführen und spätestens ab Sieben mit einer Maschenweite von 30 μm Schallwellen einer Frequenz f = 20 bis 200 Hz oder Ultraschallwellen einer Frequenz f = 20 bis 50 kHz in die Suspension einzukoppeln.

Die so vorbehandelte Suspension wird anschließend durch vorzugsweise Verdampfen des Dispergiermittels unter Vakuum auf den gewünschten Feststoffanteil eingeengt, vorzugsweise unter gleichzeitigem Einkoppeln von Ultraschallwellen einer Frequenz f = 20 bis 50 kHz. Die Suspension entmischt sich nicht und es bilden sich relativ kleine Dampfblasen. Als obere Grenze kann ein Feststoff:Wasser-Verhältnis von etwa 1,3:1 für Quarzglasteilchen eines mittleren Durchmessers von 40 nm bei einem Zusatz von 0,75 Gew.% Ammoniumfluorid erreicht werden; bei höheren Feststoffgehalten und größeren Mengen an ionogenem Zusatzstoff wird die Suspension kaum noch gießfähig und es können auch keine Dampfblasen mehr in ihr aufsteigen.

Die auf diese Weise konzentrierte und gereinigte Suspension eignet sich sehr gut zur Herstellung von Stäben nach der Folienschlauchmethode und findet insbesondere auch Anwendung bei der Herstellung von Rohren nach der Schleudergußmethode, da die hochgefüllten Suspensionen in sehr kurzer Zeit vernetzen.

Bei der z.B. aus DE-OS 35 11 449 oder DE-OS 35 11 453 bekannten Folienschlauchmethode wird die Suspension in einen dünnwandigen Folienschlauch (beispielsweise aus Polyethylenterephthalat oder einem Polyamid) gegossen, der nach dem Erstarren (Vernetzen) der Suspension von dem erhaltenen massiven Grünkörper abgetrennt wird. Die Probe läßt sich nach dem Trocknen in chlorhaltiger Atmosphäre bei einer Temperatur im Bereich von 800 bis 1100 °C reinigen und anschließend bei einer Temperatur von 1500 °C in einer Helium/Chlor-Atmosphäre zu einem transparenten Quarzglas-stab sintern, der keine ·mit dem Auge wahrnehmbaren Einschlüsse aufweist.

Bei der aus z.B. DE-OS 35 37 972 bekannten Schleudergußmethode kann die Suspension ebenfalls in einen Folienschlauch gegossen, dieser zur Stabilisierung aufgeblasen und anschließend verschlossen werden. Bei einer Rotation des Folienschlauches verteilt sich die Suspension gleichmäßig auf der Außenwand, so daß ein rohrförmiger Grünkörper hoher geometrischer Präzision erhalten wird. Dabei reicht eine Umdrehungsgeschwindigkeit von 200 U/min bereits aus.

Der Grünkörper wird nach dem Vernetzen in gleicher Weise getrocknet, gereinigt und gesintert wie es oben für die Herstellung von stabförmigen Glaskörpern beschrieben wurde.

Ausführungsbeispiel.

Zur Herstellung eines rotationssymmetrischen Glaskörpers werden 200 g einer im Handel erhältlichen pyrogenen Kieselsäure mit einem Teilchendurchmesser im Bereich von 10 bis 100 nm und einem mittleren Teilchendurchmesser von 40 nm mit einer Oberfläche von 49,8 $m^2/g$ in 230 ml doppelt destilliertem Wasser, dem 1,5 g hochreines Ammoniumfluorid zugesetzt wurden, in einem Quarzglasgefäß, das in einem Ultraschallbad steht, unter leichtem Rühren 5 min dispergiert. Anschließend wird die Suspension zuerst durch ein Sieb aus monophilen Polyesterfasern mit einer Maschenweite von 150 μm, das in die untere Öffnung eines Quarzglasrohres eingeklebt ist, gegossen; dabei werden agglomerierte größere Teilchen abgetrennt. Im anschließenden Prozeßschritt wird ein gleichartiges Sieb, das eine verringerte Maschenweite von 30 μm aufweist, eingesetzt. Ein solches Sieb wird unter Freilassen eines kleinen Luftspaltes in ein Quarzglasgefäß eingesetzt, das in einem Ultraschallbad steht, wobei das Ultraschallfeld nach dem Durchlaufen schon einer kleinen Suspensionsmenge auch in die Suspension, die noch nicht durch das Sieb gelaufen ist, einkoppelt. Mit fortschreitendem Durchlauf der Suspension durch das Sieb wird das Glasrohr mit dem Sieb hochgezogen, so daß eine Niveaudifferenz zwischen gesiebter und ungesiebter Suspension als treibende Kraft verbleibt. Bei einem Siebdurchmesser von etwa 10 cm läuft die Suspension in 1 bis 3 min durch. In gleicher Weise wird die Suspension durch ein Sieb mit 10 μm Maschenweite laufen gelassen, wobei sich die Durchlaufzeit etwas erhöht.

Bei allen Siebschritten verbleiben Rückstände in den Sieben.

Die so vorgereinigte Suspension wird in einen evakuierbaren Quarzglaskolben gegossen, der in einem Ultraschallbad steht. Mit einer kräftigen Rotationspumpe zum Evakuieren des Quarzglaskolbens wird über eine Dauer von 20 min unter Vakuum eine Menge von 60 g Wasser aus der Suspension durch Verdampfen entfernt, wobei eine Vielzahl von kleinen Dampfblasen in der Suspension aufsteigt. Die noch gut gießfähige Suspension wird in einen Folienschlauch aus Polyethylenterephthalat mit einem Durchmesser von 28 mm und einer Länge von 60 cm gegossen. Unter einem Überdruck von 0,1 bar wird der Folienschlauch stabilisiert und verklebt. Er wird anschließend in ein Stützgefäß, z.B. ein Aluminiumrohr, mit einem Durchmesser von 30 mm positioniert, wobei der Zwischenraum zwischen dem Folienschlauch und dem Stützgefäß mit einer konzentrierten, wässerigen Ammoniumjodid Lösung (100 g Ammoniumjodid gelöst in 60 ml Wasser) ausgefüllt wird, deren Dichte größer als die der Suspension ist.

Nach Verschließen des Stützgefäßes wird dieses über eine Dauer von 20 min mit einer Umdrehungsgeschwindigkeit von 300 U/min in Rotation versetzt, wobei es, z.B. mit einem Warmluftgebläse, auf eine Temperatur von etwa 50 °C erwärmt wird.

Anschließend wird der Folienschlauch aus dem Stützgefäß entnommen, abkühlen gelassen und schließlich aufgetrennt. Der feuchte Grünkörper wird über eine Dauer von 2 Tagen bei ruhender Luft getrocknet, anschließend über eine Dauer von 4 h bei einer Temperatur von 1000 °C in einer Atmosphäre aus Sauerstoff mit einem Zusatz von 10 % Thionylchlorid gereinigt und anschließend in einer Heliumatmosphäre mit 1 % Chlorgaszusatz in einem Zonenofen bei einer Temperatur von 1500 °C mit einer Absenkgeschwindigkeit von 10 mm/min zu einem klaren Quarzglas gesintert, das keine mit dem Auge erkennbaren Einschlüsse (Gasblasen) mehr aufweist. Der rohrförmige Glaskörper hatte eine Dichte von 2,20 $g/cm^3$ und einen Brechungsindex $n_D = 1,4580$.

Im vorliegenden Verfahren wurde als Dispergierflüssigkeit Wasser eingesetzt. Mit Vorteil können jedoch auch Dispergierflüssigkeiten mit niedrigerem Dampfdruck als der von Wasser, z.B. Alkohole, eingesetzt werden.

## Ansprüche

1. Verfahren zur Herstellung von Glaskörpern, bei dem das Ausgangsmaterial für den Glaskörper in Form einer thixotropen Suspension, bestehend

aus SiO$_2$-Partikeln eines Durchmessers im Bereich von 10 bis 500 nm als Feststoff und Dispergierflüssigkeit zu einem Grünkörper verformt wird, wonach der entstandene Grünkörper gereinigt und gesintert wird,

dadurch gekennzeichnet,

daß die Suspension mit einem Feststoff:Dispergierflüssigkeit-Gewichtsverhältnis von 1:1 bis 1:1,5 über Siebe einer Maschenweite im Bereich von 3 bis 300 μm abgesiebt, die abgesiebte Suspension auf ein Feststoff:Dispergierflüssigkeit-Gewichtsverhältnis von ≈ 1,3:1 eingeengt und in eine Form eingebracht wird, die Form mit der Suspension auf eine Temperatur unterhalb des Siedepunktes der Dispergierflüssigkeit erwärmt und der Grünkörper nach Abkühlen aus der Form entnommen und den weiteren Prozeßschritten zur Herstellung eines Glaskörpers unterzogen wird.

2. Verfahren nach Anspruch 1,
dadurch gekennzeichnet,
daß eine Suspension mit SiO$_2$-Teilchen eines Durchmessers im Bereich von 10 bis 100 nm mit einem mittleren Teilchendurchmesser von 40 nm eingesetzt wird.

3. Verfahren nach Anspruch 1 oder 2,
dadurch gekennzeichnet,
daß das Absieben der Suspension und das anschließende Entfernen eines Teils der Dispergierflüssigkeit zur Einengung der Suspension unter Einwirkung von Schall einer Frequenz f = 20 bis 200 Hz oder von Ultraschall einer Frequenz f = 20 bis 50 kHz durchgeführt wird.

4. Verfahren nach mindestens einem der Ansprüche 1 bis 3, dadurch gekennzeichnet,
daß die abgesiebte Suspension durch Verdampfen eines Teils der Dispergierflüssigkeit unter Vakuum eingeengt wird.

5. Verfahren nach mindestens einem der Ansprüche 1 bis 4,
dadurch gekennzeichnet,
daß die Suspension mit dem Feststoff:Dispergierflüssigkeit-Gewichtsverhältnis von ≈ 1,3:1 zur Erhöhung des Dampfdruckes der Dispergierflüssigkeit erwärmt wird.

6. Verfahren nach mindestens einem der Ansprüche 1 bis 5,
dadurch gekennzeichnet,
daß als Dispergierflüssigkeit Wasser eingesetzt wird.

7. Verfahren nach Anspruch 6,
dadurch gekennzeichnet,
daß die Suspension mit dem Feststoff:Dispergierflüssigkeit-Gewichtsverhältnis von ≈ 1,3:1 auf eine Temperatur von ≈ 50 °C erwärmt wird.

8. Verfahren nach mindestens einem der Ansprüche 1 bis 7,
dadurch gekennzeichnet,
daß der Suspension ein ionogener Zusatzstoff zugegeben wird, der den pH-Wert der Suspension in Richtung auf den basischen Bereich (pH ≥ 5 und ≤ 8) verschiebt.

9. Verfahren nach Anspruch 8,
dadurch gekennzeichnet,
daß der Suspension eine Fluorverbindung als ionogener Zusatzstoff zugegeben wird.

10. Verfahren nach Anspruch 9,
dadurch gekennzeichnet,
daß der Suspension eine wässerige 5%ige Lösung einer Fluorverbindung als ionogener Zusatzstoff zugegeben wird.

11. Verfahren nach den Ansprüchen 9 und 10,
dadurch gekennzeichnet,
daß die Fluorverbindung aus der Gruppe Ammoniumfluorid, Ammoniumhexafluorsilikat und Ammoniumhydrogenfluorid ausgewählt wird.

12. Verfahren nach mindestens einem der Ansprüche 8 bis 11,
dadurch gekennzeichnet,
daß der ionogene Zusatzstoff in einer Menge von 0,1 bis 5 Gew.%, bezogen auf den Feststoffanteil der Suspension, zugegeben wird.

13. Verfahren nach mindestens einem der Ansprüche 1 bis 12,
dadurch gekennzeichnet,
daß als Form eine der Form des herzustellenden Glaskörpers entsprechende Form aus einem vorzugsweise für Wassermoleküle permeablen und vorzugsweise hydrophoben Kunststoff eingesetzt wird.

14. Verfahren nach Anspruch 13,
dadurch gekennzeichnet,
daß eine Form aus einem elastischen Kunststoff eingesetzt wird.

15. Verfahren nach Anspruch 14,
dadurch gekennzeichnet,
daß eine Form aus Siliconkautschuk eingesetzt wird.

16. Verfahren nach Anspruch 13,
dadurch gekennzeichnet,
daß eine Form aus einem unter leichtem Überdruck formstabilen Kunststoff eingesetzt wird.

17. Verfahren nach Anspruch 16,
dadurch gekennzeichnet,
daß eine Form aus Polyethylenterephthalat oder einem Polyamid eingesetzt wird.

18. Verfahren nach mindestens einem der Ansprüche 13 bis 17,
dadurch gekennzeichnet,
daß als Form ein Schlauch eingesetzt wird.

19. Verfahren nach Anspruch 18,
dadurch gekennzeichnet,
daß die Form in eine der Form des herzustellenden Glaskörpers entsprechende Stützform eingesetzt wird.

20. Verfahren nach Anspruch 19,
dadurch gekennzeichnet,
daß der Zwischenraum zwischen der Form und der Stützform mit einer mit dem Material der Form chemisch nicht reagierenden Flüssigkeit ausgefüllt wird, deren Dichte größer als die Dichte der in der Form enthaltenen Suspension ist.

21. Verfahren nach Anspruch 20,
dadurch gekennzeichnet,
daß als Flüssigkeit eine konzentrierte, wässerige Ammoniumjodid-Lösung eingesetzt wird.

22. Verwendung von nach dem Verfahren gemäß den Ansprüchen 1 bis 21 hergestellten Glaskörpern als Vorform für optische Wellenleiter.

23. Verwendung von nach dem Verfahren gemäß den Ansprüchen 1 bis 21 hergestellten Glaskörpern für Lampenkolben, insbesondere von Halogen- oder Gasentladungslampen.